Europäisches Patentamt

(19) **European Patent Office**

**Office européen des brevets**

(11) Veröffentlichungsnummer: **0 014 179**
**B1**

(12) # EUROPÄISCHE PATENTSCHRIFT

(45) Veröffentlichungstag der Patentschrift:
**12.05.82**

(51) Int. Cl.³: **B 01 D 11/02,** B 01 L 3/14,
B 01 L 11/00, B 01 D 33/00,
B 02 C 17/20

(21) Anmeldenummer: **80810013.5**

(22) Anmeldetag: **14.01.80**

(54) **Vorrichtung zum Extrahieren von Konstituenten aus festen und halbfesten Stoffen.**

(30) Priorität: **18.01.79 CH 486/79**

(43) Veröffentlichungstag der Anmeldung:
**06.08.80 Patentblatt 80/16**

(45) Bekanntmachung des Hinweises auf die Patenterteilung:
**12.05.82 Patentblatt 82/19**

(84) Benannte Vertragsstaaten:
**BE CH DE FR GB LU NL SE**

(56) Entgegenhaltungen:
**DE-A-2 125 027**
**DE-A-2 244 686**
**DE-A-2 455 853**
**DE-A-2 756 986**
**FR-A-974 392**
**US-A-1 456 147**
**US-A-2 965 255**
**US-A-3 215 500**
**US-A-3 773 468**
**US-A-3 870 639**
**US-A-3 687 296**

(73) Patentinhaber: **CIBA-GEIGY AG, Patentabteilung**
**Postfach, CH-4002 Basel (CH)**

(72) Erfinder: **Bartels, Hermann, Dr., Bollwerkstrasse 112,**
**CH-4102 Binningen (CH)**

Vorrichtung zum Extrahieren von Konstituenten aus festen und halbfesten Stoffen

Zur Probenvorbereitung fester Materialien, z. B. Dragées etc., sind eine Reihe von Grundoperationen, wie z. B. Abzählen bzw. Einwägen, Zerkleinern, Lösen und Klären nötig. Bisher müssen alle diese Operationen in Einzelschritten unter häufigem Gefäßwechsel durchgeführt werden, was umständlich ist und außerdem einen relativ hohen Aufwand an Geschirr und auch Laborfläche erfordert. Es existieren zwar bereits Geräte, die die genannten Operationen automatisch durchführen, solche Geräte sind jedoch recht aufwendig und lohnen sich nur bei größeren Analysenreihen.

Aufgabe der Erfindung ist demnach eine möglichst einfache und universelle Vorrichtung zu schaffen, die die Probenvorbereitung von festen Materialien vereinfacht und erleichtert. Diese Aufgabe wird durch die im Anspruch 1 beschriebene Vorrichtung gelöst.

Aus z. B. der US-A-3 870 639 und der DE-A-2 244 686 sind zwar Vorrichtungen gemäß dem Oberbegriff des Patentanspruchs 1 bekannt. Diese Vorrichtungen sind in erster Linie dazu bestimmt, bei Blutanalysen die festen Blutbestandteile von den flüssigen abzutrennen. Sie sind reine Trennvorrichtungen und erlauben es nicht, komplette Extrahiervorgänge, zu denen auch eine entsprechende Vorbereitung der Proben, wie z. B. das Zerkleinern derselben, gehört, in ein und demselben Gefäß durchzuführen.

Im folgenden wird die Erfindung anhand eines in der Zeichnung dargestellten Ausführungsbeispiels näher erläutert. Es zeigt

Fig. 1 eine teilweise geschnittene Ansicht des Gefäßes der Vorrichtung,

Fig. 2 den Einsatz der Vorrichtung im Schnitt,

Fig. 3 einen Schnitt nach der Linie III-III der Fig. 2 und

Fig. 4 die Vorrichtung mit in das Gefäß eingeschobenem Einsatz im Schnitt.

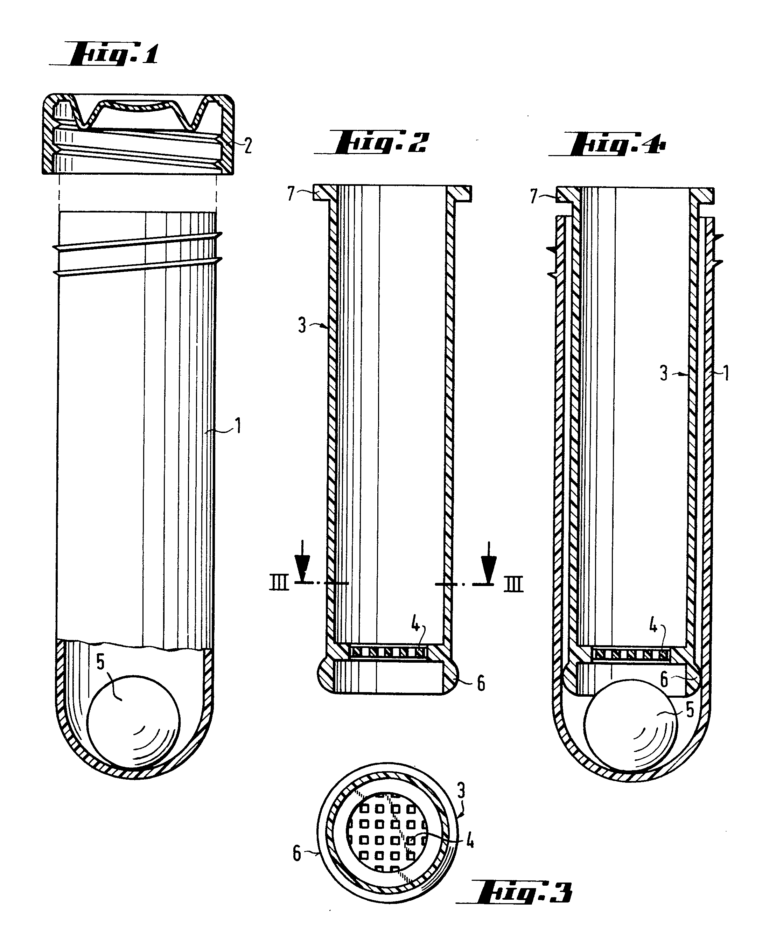

Die dargestellte Vorrichtung besteht aus einem zylindrischen Gefäß 1 mit Rundboden und einer Schraubkappe 2, einem kolbenartigen Einsatz 3 mit einem Siebboden 4 und einer Kugel 5 aus Wolframkarbid oder Glas. Das Gefäß 1 und die Schraubkappe 2 bestehen aus einem schlagfesten Kunststoff, vorzugsweise Polypropylen. Der Einsatz kann aus beliebigem Kunststoff bestehen.

Der Einsatz 3 ist knapp unterhalb des Siebbodens 4, der auch mit einem nicht gezeigten Filter belegt sein kann, mit einem Wulst 6 oder ebenfalls nicht gezeigten Lippen versehen, so daß der Einsatz flüssigkeitsdicht im Gefäß 1 verschiebbar ist. Am oberen Rand des Einsatzes ist ein Flansch 7 ausgebildet, der das Einschieben des Einsatzes in das Gefäß begrenzt, so daß zwischen dem Gefäßboden und dem Siebboden des Einsatzes ausreichend Platz für die Kugel bleibt.

Der Gebrauch der Vorrichtung ist wie folgt:

Das feste oder halbfeste Material, z. B. Tabletten oder Dragées od. dgl., wird in der gewünschten Menge in das Gefäß, in dem sich vorerst nur die Kugel befindet, eingebracht. Anschließend wird das gewünschte flüssige Lösungsmittel zugegeben. Das Gefäß wird dann verschlossen und durch Schütteln wird das feste Material mittels der Kugel zerschlagen. Nunmehr wird der Einsatz in das Gefäß eingeführt. Durch dessen Sieb- oder Filterboden werden die nicht gelösten festen Rückstände in den Bodenbereich des Gefäßes verdrängt und die flüssige Phase kann aus dem Gefäß entnommen werden.

Es versteht sich, daß die vorbeschriebene Vorrichtung für eine Vielzahl von Anwendungen geeignet ist. So kann das Gefäß z. B. auch direkt in eine Schüttelmaschine oder eine Zentrifuge oder z. B. in ein Wärmebad eingesetzt werden. Weiter können mit der Vorrichtung sogar auch einfache Flüssig-Flüssig-Extraktionen durchgeführt werden.

## Patentansprüche

1. Extrahiervorrichtung mit einem rohrförmigen Gefäß und einem darin flüssigkeitsdicht verschiebbaren kolbenartigen, mit einem Sieb- bzw. Filterboden ausgestatteten Einsatz zum Trennen von festen und flüssigen Phasen, dadurch gekennzeichnet, daß das Gefäß einen abnehmbaren Verschluß aufweist und daß im Gefäß eine Kugel od. dgl. zum Zerschlagen fester bzw. halbfester Stoffe durch Schütteln des Gefäßes angeordnet ist.

2. Vorrichtung nach Anspruch 1, dadurch gekennzeichnet, daß das Gefäß aus schlagfestem Kunststoff, insbesondere Polypropylen besteht.

3. Vorrichtung nach Anspruch 1 oder 2, dadurch gekennzeichnet, daß die Kugel aus Wolframkarbid besteht.

4. Vorrichtung nach einem der Ansprüche 1-3, dadurch gekennzeichnet, daß der Verschluß eine Schraubkappe ist.

5. Vorrichtung nach einem der Ansprüche 1 bis 4, dadurch gekennzeichnet, daß der Einsatz nur so weit in das Gefäß einschiebbar bzw. das Gefäß so ausgebildet und der Sieb- bzw. Filterboden des Einsatzes so angeordnet ist, daß der Sieb- bzw. Filterboden die Kugel bei vertikaler Haltung des Gefäßes nicht berührt.

## Claims

1. An extraction device comprising a tubular container with a fluid-tight, slidable, plunger-like insert provided with a perforated or filter bottom for separating solid and liquid phases, characterized in that the said container has a removable closing arrangement, and that there is located in the container a ball or the like for crushing solid or semi-solid substances when the container is shaken.

2. A device according to Claim 1, wherein the container is made of impact-resistant plastics material, particularly polypropylene.

3. A device according to Claim 1 or 2, wherein the ball is made of tungsten carbide.

4. A device according to any one of Claims 1–3, wherein the closing arrangement is a screw cap.

5. A device according to any one of Claims 1–4, wherein the distance the insert can be slid into the container, or the design of the container, and the construction of the perforated or filter bottom of the insert are such that, when the container is in the vertical position, the perforated or filter bottom does not touch the ball.

**Revendications**

1. Dispositif d'extraction avec un récipient tubulaire et une tige interne en forme de piston, déplaçable à l'intérieur de façon étanche aux liquides, munie d'un fond perforé ou avec filtre et servant à séparer les phases solides des phases liquides, caractérisé par le fait que le récipient comprend une fermeture amovible et que dans le récipient est disposée une bille ou analogue pour briser les matières solides ou semi-solides par secouage du récipient.

2. Dispositif selon la revendication 1, caractérisé par le fait que le récipient est réalisé en matière plastique résistante au choc, en particulier en polypropylène.

3. Dispositif selon la revendication 1 ou 2, caractérisé par le fait que la bille est réalisée en carbure de tungstène.

4. Dispositif selon l'une des revendications 1 à 3, caractérisé par le fait que la fermeture est un bouchon fileté.

5. Dispositif selon l'une des revendications 1 à 4, caractérisé par le fait que la tige interne peut être engagée juste assez loin dans le récipient, ou le récipient réalisé et le fond perforé, ou avec filtre de la tige interne disposé de façon que ce fond perforé ou avec filtre ne touche pas la bille en position verticale du récipient.

**Fig.1**

**Fig.2**

**Fig.4**

**Fig.3**